# EUROPÄISCHE PATENTSCHRIFT

(11) **EP 3 665 342 B1**
(45) Veröffentlichungstag und Bekanntmachung des Hinweises auf die Patenterteilung: **02.06.2021**
(21) Anmeldenummer: 18742783.6
(22) Anmeldetag: 17.07.2018
(51) Int. Cl.: E04G 21/04, B66C 13/06, F15B 15/20, B66C 13/18, B66C 13/40, E02F 9/22, F16F 15/027, F15B 11/024

(54) **GROSSMANIPULATOR UND HYDRAULISCHE SCHALTUNGSANORDNUNG FÜR EINEN GROSSMANIPULATOR**
LARGE MANIPULATOR AND HYDRAULIC CIRCUIT ARRANGEMENT FOR A LARGE MANIPULATOR
GRAND MANIPULATEUR ET CIRCUIT HYDRAULIQUE POUR GRAND MANIPULATEUR

(30) Priorität: 10.08.2017 DE 102017118274
(43) Veröffentlichungstag der Anmeldung: 17.06.2020
(73) Patentinhaber: Putzmeister Engineering GmbH, 72631 Aichtal (DE)
(72) Erfinder: DIEBOLD, Martin, 72768 Reutlingen (DE); MÜNZENMAIER, Werner, 72622 Nürtingen (DE); ZIRBS, Roman, 71263 Weil der Stadt (DE)
(74) Vertreter: Gauss, Nikolai
(86) Internationale Anmeldenummer: PCT/EP2018/069400
(87) Internationale Veröffentlichungsnummer: WO 2019/029957

(56) Entgegenhaltungen:
- EP-A1- 1 319 110
- DE-A1-102007 029 358
- JP-A- 2013 040 641

## Beschreibung

Die Erfindung betrifft einen Großmanipulator für Betonpumpen, mit einem auf einem Gestell angeordneten, um eine vertikale Drehachse drehbaren Mastbock, mit einem aus mindestens zwei Mastarmen zusammengesetzten Knickmast, der eine Betonförderleitung trägt, und mit wenigstens einem hydraulischen Antriebsaggregat für das Verschwenken wenigstens eines der Mastarme um eine horizontale Drehachse, das einen Hydraulikzylinder und einen in dem Hydraulikzylinder bewegbar angeordneten Kolben mit einer daran angeschlossenen Kolbenstange aufweist, wobei in dem Hydraulikzylinder ein mit Hydraulikflüssigkeit beaufschlagbares kolbenseitiges Arbeitsvolumen und ein mit Hydraulikflüssigkeit beaufschlagbares stangenseitiges Arbeitsvolumen ausgebildet ist. Darüber hinaus betrifft die Erfindung ein Verfahren zum Betrieb eines Großmanipulators.

Ein Großmanipulator der eingangs genannten Art ist aus der EP 1 319 110 A1 und der WO 02/25036 A1 bekannt. Dieser Großmanipulator hat einen Verteilermast mit einem aus Mastarmen zusammengesetzten Knickmast, wobei die Mastarme um jeweils horizontale, zueinander parallele Knickachsen mittels je eines hydraulischen Antriebsaggregats in Form eines Linearmotors mit einem Hydraulikzylinder verschwenkbar sind. Dieser Großmanipulator enthält eine Steuereinrichtung für die Mastbewegung mit Hilfe von den einzelnen Antriebsaggregaten zugeordneten Stellgliedern.

In der DE 10 2007 029 358 A1 ist eine Hydraulikschaltung für einen Bagger oder einen Telehandler beschrieben, die für das Ansteuern eines Hydraulikzylinders dient. Diese Hydraulikschaltung enthält als ein Bypassventil wirkende Wegeventile, die in Abhängigkeit von einer Hydraulikzylinder-Bewegungsrichtung ansteuerbar sind.

Aus der JP 2013-040641 A ist eine Hydraulikschaltung für einen Bagger bekannt, bei der das Einstellen eines Bypassventils in Abhängigkeit des Drucks in dem Ringraum des Hydraulikzylinders und in Abhängigkeit des Drucks in einem Ringraum des Hydraulikzylinders oder in Abhängigkeit des Drucks in Hydraulikleitungen erfolgt.

Für das schnelle Verstellen der Mastarme in den Knickmasten bekannter Großmanipulatoren ist es erforderlich, dass sehr große Mengen Hydraulikflüssigkeit mit einer hohen Strömungsgeschwindigkeit bewegt werden. In Großmanipulatoren, die lange Knickmaste mit vielen Mastarmen haben, müssen deshalb leistungsstarke Hydraulikpumpen und große Tanks für Hydraulikflüssigkeit vorgesehen werden. Die Folge ist, dass solche Großmanipulatoren sehr schwer sind.

Aufgabe der Erfindung ist es, einen Großmanipulator für Betonpumpen bereitzustellen, der es ermöglicht, für das Verstellen der Mastarme in einem Knickmast möglichst geringere Mengen Hydraulikflüssigkeit zu bewegen und Hydraulikpumpen mit einer reduzierten Leistung einzusetzen, ohne dass dabei die Funktionalität des Großmanipulators beeinträchtigt wird.

Diese Aufgabe wird mit dem in Anspruch 1 angegebenen Großmanipulator, und mit dem in Anspruch 9 angegebenen Betriebsverfahren gelöst. Vorteilhafte Ausführungsformen der Erfindung sind in den abhängigen Ansprüchen angegeben.

Die Erfindung schlägt vor, dass ein erfindungsgemäßer Großmanipulator für Betonpumpen einen auf einem Gestell angeordneten, um eine vertikale Drehachse drehbaren Mastbock und einen aus mindestens zwei Mastarmen zusammengesetzten Knickmast hat, der eine Betonförderleitung trägt. In einem erfindungsgemäßen Großmanipulator für Betonpumpen gibt es wenigstens ein hydraulisches Antriebsaggregat für das Verschwenken wenigstens eines der Mastarme um eine horizontale Drehachse, das einen Hydraulikzylinder und einen in dem Hydraulikzylinder bewegbar angeordneten Kolben mit einer daran angeschlossenen Kolbenstange aufweist, wobei in dem Hydraulikzylinder ein mit Hydraulikflüssigkeit beaufschlagbares kolbenseitiges Arbeitsvolumen und ein mit Hydraulikflüssigkeit beaufschlagbares stangenseitiges Arbeitsvolumen ausgebildet ist. Ein erfindungsgemäßer Großmanipulator enthält eine hydraulische Schaltungsanordnung für den Antrieb des wenigstens einen hydraulischen Antriebsaggregats, die in einem ersten Schaltzustand einen ersten Arbeitsanschluss für die Zufuhr oder Abfuhr der Hydraulikflüssigkeit durch einen ersten Fluidkanal mit dem stangenseitigen Arbeitsvolumen und einen zweiten Arbeitsanschluss für die Zufuhr oder Abfuhr der Hydraulikflüssigkeit durch einen zweiten Fluidkanal mit dem kolbenseitigen Arbeitsvolumen verbindet und die in einem von dem ersten Schaltzustand verschiedenen zweiten Schaltzustand den ersten Arbeitsanschluss von dem ersten Fluidkanal trennt und dabei den ersten Fluidkanal an den zweiten Fluidkanal für das Zuführen von Hydraulikflüssigkeit aus dem stangenseitigen Arbeitsvolumen in das kolbenseitige Arbeitsvolumen anschließt.

Auf diese Weise ist es möglich, einen Großmanipulator leichter zu bauen, da so die Menge der Hydraulikflüssigkeit, die in einem Großmanipulator mitgeführt werden muss, reduziert werden kann und für das Bewegen der Hydraulikflüssigkeit in dem Großmanipulator entsprechend kleinere Hydraulikpumpen eingesetzt werden können, die ein geringeres Gewicht haben.

Ein erfindungsgemäßer Großmanipulator weist wenigstens eine Betriebszustands-Erfassungseinrichtung für das Erfassen wenigstens einer Betriebszustandsgröße des Großmanipulators auf und enthält eine Ansteuerbaugruppe für das Einstellen des Schaltzustands der wenigstens einen hydraulischen Schaltungsanordnung in Abhängigkeit der wenigstens einen mittels der Betriebszustands-Erfassungseinrichtung erfassten Betriebszustandsgröße des Großmanipulators sowie eine Einrichtung für das Zuführen eines mittels der Betriebszustands-Erfassungseinrichtung erfassten Betriebszustandsgröße des Großmanipulators an die Ansteuerbaugruppe für das betriebszustandsabhängige Einstellen des Schaltzustands der wenigstens einen hydraulischen Schaltungsanordnung.

Die wenigstens eine Betriebszustands-Erfassungseinrichtung ist dabei für das Erfassen wenigstens einer Betriebszustandsgröße des Großmanipulators aus der Gruppe Knickmast-Pose und Winkelstellung eines Mastarms ausgebildet.

Die wenigstens eine Betriebszustands-Erfassungseinrichtung kann auch zusätzlich für das Erfassen wenigstens einer Betriebszustandsgröße des Großmanipulators aus der Gruppe Knickmast-Bewegungszustand, Knickmast-Belastung, Belastung eines Mastarms des Knickmasts, Betonpumpen-Betriebszustand, Hydraulikdruck in dem stangenseitigen Arbeitsvolumen des Hydraulikzylinders des wenigstens einen hydraulischen Antriebsaggregats, Hydraulikdruck in dem kolbenseitigen Arbeitsvolumen des Hydraulikzylinders des wenigstens einen hydraulischen Antriebsaggregats ausgebildet sein.

Die wenigstens eine Betriebszustands-Erfassungseinrichtung für das Erfassen wenigstens einer Betriebszustandsgröße des Großmanipulators kann dabei als ein Druckwandler für das Erfassen des Hydraulikdrucks in einem zu dem stangenseitigen Arbeitsvolumen des Hydraulikzylinders offenen Abschnitt des ersten Fluidkanals ausgebildet sein. Insbesondere kann die Betriebszustands-Erfassungseinrichtung den Hydraulikdruck in einem zu dem kolbenseitigen Arbeitsvolumen des Hydraulikzylinders offenen Abschnitt des zweiten Fluidkanals erfassen.

Auf diese Weise ist es möglich, die für das Verstellen des Großmanipulators bewegte Menge von Hydraulikflüssigkeit abhängig von einer mechanischen Belastung der Antriebsaggregate in dem Großmanipulator einzustellen.

In einem erfindungsgemäßen Großmanipulator kann insbesondere vorgesehen sein, dass die hydraulische Schaltungsanordnung enthält:
- Ein durch eine mit dem zweiten Arbeitsanschluss für die Zufuhr oder Abfuhr der Hydraulikflüssigkeit kommunizierende erste Drucksteuerleitung hydraulisch angesteuertes und in eine erste Schaltstellung vorgespanntes erstes Senkbremsventil, das in der ersten Schaltstellung den ersten Fluidkanal freigibt, wenn der Hydraulikdruck in der ersten Drucksteuerleitung einen Schwellwert überschreitet, und das in wenigstens einer von der ersten Schaltstellung verschiedenen zweiten Schaltstellung den ersten Fluidkanal sperrt, wenn der Hydraulikdruck in der Drucksteuerleitung den Schwellwert unterschreitet.
- Ein zu dem ersten Senkbremsventil parallel angeordnetes erstes Rückschlagventil, das den Rückfluss von Hydraulikflüssigkeit aus dem stangenseitigen Arbeitsvolumen des Hydraulikzylinders unterbindet.
- Ein durch eine mit dem ersten Fluidkanal auf einer dem stangenseitigen Arbeitsvolumen abgewandten Seite des ersten Senkbremsventils kommunizierende weitere Drucksteuerleitung hydraulisch angesteuertes und in eine erste Schaltstellung vorgespanntes zweites Senkbremsventil, das den zweiten Fluidkanal freigibt, wenn der Hydraulikdruck in der weiteren Drucksteuerleitung einen Schwellwert überschreitet, und das in wenigstens einer von der ersten Schaltstellung verschiedenen zweiten Schaltstellung den zweiten Fluidkanal sperrt, wenn der Hydraulikdruck in der weiteren Drucksteuerleitung den Schwellwert unterschreitet.
- Ein zu dem zweiten Senkbremsventil parallel angeordnetes zweites Rückschlagventil, das den Rückfluss von Hydraulikflüssigkeit aus dem kolbenseitigen Arbeitsvolumen des Hydraulikzylinders zu dem zweiten Arbeitsanschluss für die Zufuhr oder Abfuhr der Hydraulikflüssigkeit unterbindet.
- Ein Bypassventil, das in einem ersten Schaltzustand den ersten Fluidkanal mit dem ersten Arbeitsanschluss für die Zufuhr oder Abfuhr der Hydraulikflüssigkeit verbindet und dabei den ersten Fluidkanal von dem zweiten Fluidkanal trennt und das in einem von dem ersten Schaltzustand verschiedenen zweiten Schaltzustand den ersten Fluidkanal auf der dem kolbenseitigen Arbeitsvolumen abgewandten Seite des zweiten Senkbremsventils an den zweiten Fluidkanal anschließt und dabei den ersten Fluidkanal von dem ersten Arbeitsanschluss für die Zufuhr oder Abfuhr des hydraulischen Arbeitsmediums trennt.

Das erste Senkbremsventil kann eine darin integrierte Drossel enthalten. In der ersten Schaltstellung gibt das erste Senkbremsventil dann den ersten Fluidkanal durch die darin integrierte Drossel frei, wenn der Hydraulikdruck in der ersten Drucksteuerleitung einen Schwellwert überschreitet.

Mittels der in das erste Senkbremsventil integrierten Drossel wird die aus dem stangenseitigen Arbeitsvolumen des Hydraulikzylinders in der ersten Schaltstellung des ersten Senkbremsventils austretende Hydraulikflüssigkeit vorgespannt. Das Vorspannen der aus dem stangenseitigen Arbeitsvolumen des Hydraulikzylinders in der ersten Schaltstellung des Senkbremsventils austretenden Hydraulikflüssigkeit bewirkt, dass Druckschwankungen in dem hydraulischen Schaltkreis entgegengewirkt wird, so dass oszillatorische Bewegungen der Kolbenstange unterbunden oder zumindest minimiert werden. In einer von der ersten Schaltstellung verschiedenen zweiten Schaltstellung sperrt dagegen das erste Senkbremsventil den ersten Fluidkanal.

Entsprechend kann das zweite Senkbremsventil eine darin integrierte Drossel enthalten. In der ersten Schaltstellung gibt das zweite Senkbremsventil den zweiten Fluidkanal durch eine darin integrierte Drossel frei, wenn der Hydraulikdruck in der weiteren Drucksteuerleitung einen Schwellwert überschreitet. Mittels der in das zweite Senkbremsventil integrierten Drossel wird die aus dem kolbenseitigen Arbeitsvolumen des Hydraulikzylinders in der ersten Schaltstellung des zweiten Senkbremsventils austretende Hydraulikflüssigkeit vorgespannt.

Das Vorspannen der aus dem kolbenseitigen Arbeitsvolumen des Hydraulikzylinders in der ersten Schaltstellung des zweiten Senkbremsventils austretende Hydraulikflüssigkeit bewirkt ebenfalls, dass Druckschwankungen in dem hydraulischen Schaltkreis entgegengewirkt wird, so dass oszillatorische Bewegungen der Kolbenstange unterbunden oder zumindest minimiert werden. In einer von der wenigstens einen ersten Schaltstellung verschiedenen zweiten Schaltstellung sperrt dagegen das zweite Senkbremsventil den zweiten Fluidkanal.

Zu bemerken ist, dass vorgesehen sein kann, den Drosselquerschnitt der in die Senkbremsventile integrierten Drossel einstellbar zu gestalten und in Abhängigkeit des Schaltzustands des Bypassventils so einzustellen, dass der Drosselquerschnitt der in die Senkbremsventile integrierten Drossel in dem ersten Schaltzustand des Bypassventils kleiner ist als in dem zweiten Schaltzustand des Bypassventils, wenn die Senkbremsventile in den ersten Schaltzustand geschaltet sind. Auf diese Weise lässt sich erreichen, dass die Vorspannung der aus dem kolbenseitigen bzw. stangenseitigen Arbeitsvolumen austretenden Hydraulikflüssigkeit nicht oder nur wenig zunimmt, wenn das Bypassventil den ersten Fluidkanal auf der dem kolbenseitigen Arbeitsvolumen abgewandten Seite des zweiten Senkbremsventils mit dem zweiten Fluidkanal verbindet und dabei den ersten Fluidkanal von dem ersten Arbeitsanschluss für die Zufuhr oder Abfuhr des hydraulischen Arbeitsmediums trennt.

Von Vorteil ist es, wenn das Bypassventil einen elektrischen Antrieb oder einen hydraulischen Antrieb oder einen pneumatischen Antrieb oder einen mechanischen Antrieb für das Einstellen des ersten Schaltzustands und des zweiten Schaltzustands hat. Das Bypassventil kann dabei in den ersten Schaltzustand mechanisch oder hydraulisch oder pneumatisch oder elektrisch vorgespannt sein.

Unter einem elektrischen Antrieb ist dabei vorliegend ein Elektromotor zu verstehen, der für das Einstellen des Schaltzustands des Bypassventils dient. Ein pneumatischer Antrieb ist z. B. ein pneumatischer Linearmotor mit einem Pneumatikzylinder, mittels dessen das Bypassventil verstellt werden kann. Ein hydraulischer Antrieb ist z. B. ein Hydraulikmotor für das Einstellen des Bypassventils. Unter einem mechanischen Antrieb ist vorliegend ein Mechanismus zu verstehen, der mittels eines Gestänges oder einer Kurvenbahn bei bestimmten Gelenkwinkeln des Knickmasts das Einstellen des Schaltzustands des Bypassventils bewirkt.

Die hydraulische Schaltungsanordnung in einem erfindungsgemäßen Großmanipulator hat bevorzugt einen Überdruck-Anschluss und ein erstes Überdruckventil, das den ersten Fluidkanal auf der dem stangenseitigen Arbeitsvolumen des Hydraulikzylinders zugewandten Seite des ersten Senkbremsventils bei einem Überdruck des hydraulischen Arbeitsmediums mit dem Überdruck-Anschluss verbindet, und ein zweites Überdruckventil, das den zweiten Fluidkanal auf der dem kolbenseitigen Arbeitsvolumen des Hydraulikzylinders zugewandten Seite des ersten Senkbremsventils bei einem Überdruck des hydraulischen Arbeitsmediums mit dem Überdruck-Anschluss verbindet.

Eine hydraulische Schaltungsanordnung hat einen ersten Arbeitsanschluss und einen zweiten Arbeitsanschluss für die Zufuhr oder Abfuhr von Hydraulikflüssigkeit für den Antrieb wenigstens eines hydraulischen Antriebsaggregats für das Verschwenken wenigstens eines Mastarms in einem Großmanipulator für Betonpumpen, der einen auf einem Gestell angeordneten, um eine vertikale Drehachse drehbaren Mastbock und einen an dem Mastbock aufgenommenen, aus mindestens zwei Mastarmen zusammengesetzten Knickmast enthält, der eine Betonförderleitung trägt. Das hydraulische Antriebsaggregat weist dabei einen Hydraulikzylinder und einen in dem Hydraulikzylinder bewegbar angeordneten Kolben mit einer daran angeschlossenen Kolbenstange auf, wobei in dem Hydraulikzylinder ein mit Hydraulikflüssigkeit beaufschlagbares kolbenseitiges Arbeitsvolumen und ein mit Hydraulikflüssigkeit beaufschlagbares stangenseitiges Arbeitsvolumen ausgebildet ist. In der hydraulischen Schaltungsanordnung gibt es ein über eine mit dem zweiten Arbeitsanschluss für die Zufuhr oder Abfuhr der Hydraulikflüssigkeit kommunizierende Drucksteuerleitung hydraulisch angesteuertes und in eine erste Schaltstellung mechanisch vorgespanntes erstes Senkbremsventil, das einen ersten Fluidkanal freigibt, wenn der Hydraulikdruck in der Drucksteuerleitung einen Schwellwert überschreitet, und das in wenigstens einer von der ersten Schaltstellung verschiedenen zweiten Schaltstellung den ersten Fluidkanal sperrt, wenn der Hydraulikdruck in der Drucksteuerleitung den Schwellwert unterschreitet, ein zu dem ersten Senkbremsventil parallel angeordnetes erstes Rückschlagventil, das den Rückfluss von Hydraulikflüssigkeit aus dem stangenseitigen Arbeitsvolumen des Hydraulikzylinders unterbindet, ein über eine mit dem ersten Fluidkanal auf einer dem stangenseitigen Arbeitsvolumen abgewandten Seite des ersten Senkbremsventils kommunizierende Drucksteuerleitung hydraulisch angesteuertes und in eine erste Schaltstellung mechanisch vorgespanntes zweites Senkbremsventil, das einen zweiten Fluidkanal freigibt, wenn der Hydraulikdruck in der Drucksteuerleitung einen Schwellwert überschreitet, und das in einer von der ersten Schaltstellung verschiedenen zweiten Schaltstellung den zweiten Fluidkanal sperrt, wenn der Hydraulikdruck in der Drucksteuerleitung den Schwellwert unterschreitet, ein zu dem zweiten Senkbremsventil parallel angeordnetes zweites Rückschlagventil, das den Rückfluss von Hydraulikflüssigkeit aus dem kolbenseitigen Arbeitsvolumen des Hydraulikzylinders zu dem zweiten Arbeitsanschluss für die Zufuhr oder Abfuhr der Hydraulikflüssigkeit unterbindet, und ein Bypassventil, das in einem ersten Schaltzustand den ersten Fluidkanal mit dem ersten Arbeitsanschluss für die Zufuhr oder Abfuhr der Hydraulikflüssigkeit verbindet und dabei den ersten Fluidkanal von dem zweiten Fluidkanal trennt und das in einem von dem ersten Schaltzustand verschiedenen zweiten Schaltzustand den ersten Fluidkanal auf der dem kolbenseitigen Arbeitsvolumen abgewandten Seite des zweiten Senkbremsventils mit dem zweiten Fluidkanal verbindet und dabei den ersten Fluidkanal von dem ersten Arbeitsanschluss für die Zufuhr oder Abfuhr des hydraulischen Arbeitsmediums trennt.

Das Bypassventil kann dabei einen elektrischen Antrieb oder einen hydraulischen Antrieb oder einen pneumatischen Antrieb oder einen mechanischen Antrieb für das Einstellen des ersten Schaltzustands und des zweiten Schaltzustands aufweisen. Insbesondere kann das Bypassventil in den ersten Schaltzustand mechanisch vorgespannt sein.

Die hydraulische Schaltungsanordnung kann einen Überdruck-Anschluss und ein erstes Überdruckventil aufweisen, das den ersten Fluidkanal auf der dem stangenseitigen Arbeitsvolumen des Hydraulikzylinders zugewandten Seite des ersten Senkbremsventils bei einem Überdruck des hydraulischen Arbeitsmediums mit dem Überdruck-Anschluss verbindet, und ein zweites Überdruckventil, das den zweiten Fluidkanal auf der dem kolbenseitigen Arbeitsvolumen des Hydraulikzylinders zugewandten Seite des ersten Senkbremsventils bei einem Überdruck des hydraulischen Arbeitsmediums mit dem Überdruck-Anschluss verbindet.

Das erfindungsgemäße Verfahren zum Betrieb eines Großmanipulators für Betonpumpen, der einen auf einem Gestell angeordneten, um eine vertikale Drehachse drehbaren Mastbock hat, der einen aus mindestens zwei Mastarmen zusammengesetzten Knickmast aufweist, der eine Betonförderleitung trägt, und der wenigstens ein hydraulisches Antriebsaggregat für das Verschwenken wenigstens eines der Mastarme um eine horizontale Drehachse enthält, das einen Hydraulikzylinder und einen in dem Hydraulikzylinder bewegbar angeordneten Kolben mit einer daran angeschlossenen Kolbenstange hat, wobei in dem Hydraulikzylinder ein durch einen ersten Fluidkanal mit Hydraulikflüssigkeit beaufschlagbares stangenseitiges Arbeitsvolumen und ein durch einen zweiten Fluidkanal mit Hydraulikflüssigkeit beaufschlagbares kolbenseitiges Arbeitsvolumen ausgebildet ist, sieht vor, dass wenigstens eine Betriebszustandsgröße des Großmanipulators erfasst wird und in Abhängigkeit der erfassten Betriebszustandsgröße entweder der erste Fluidkanal mit einem ersten Arbeitsanschluss für die Zufuhr oder Abfuhr der Hydraulikflüssigkeit verbunden und dabei der erste Fluidkanal von dem zweiten Fluidkanal getrennt wird oder der erste Fluidkanal an den zweiten Fluidkanal angeschlossen und dabei der erste Fluidkanal von dem ersten Arbeitsanschluss für die Zufuhr oder Abfuhr des hydraulischen Arbeitsmediums getrennt wird. Die wenigstens eine erfasste Betriebszustandsgröße des Großmanipulators ist dabei eine Betriebszustandsgröße aus der Gruppe Knickmast-Pose undWinkelstellung eines Mastarms.

Als eine Betriebszustandsgröße, in deren Abhängigkeit der erste Fluidkanal von dem zweiten Fluidkanal getrennt wird oder der erste Fluidkanal an den zweiten Fluidkanal angeschlossen und dabei der erste Fluidkanal von dem ersten Arbeitsanschluss für die Zufuhr oder Abfuhr des hydraulischen Arbeitsmediums getrennt wird, kann zusätzlich auch eine Betriebszustandsgröße des Großmanipulators aus der Gruppe Knickmast-Bewegungszustand, Knickmast-Belastung, Belastung eines Mastarms des Knickmasts, Betonpumpen-Betriebszustand, Hydraulikdruck in dem stangenseitigen Arbeitsvolumen des Hydraulikzylinders des wenigstens einen hydraulischen Antriebsaggregats, Hydraulikdruck in dem kolbenseitigen Arbeitsvolumen des Hydraulikzylinders des wenigstens einen hydraulischen Antriebsaggregats erfasst werden.

Im Folgenden wird die Erfindung anhand der in der Zeichnung in schematischer Weise dargestellten Ausführungsbeispiele näher erläutert.

Es zeigen:
- Fig. 1: eine Seitenansicht einer Autobetonpumpe mit einem zusammengefalteten Verteilermast;
- Fig. 2: die Autobetonpumpe mit dem Verteilermast in einer ausgefalteten Stellung;
- Fig. 3: eine Steuereinrichtung für das Steuern hydraulischer Antriebsaggregate der Autobetonpumpe;
- Fig. 4: einen hydraulischen Schaltkreis mit hydraulischen Schaltungsanordnungen für den Antrieb der hydraulischen Antriebsaggregate;
- Fig. 5: eine hydraulische Schaltungsanordnung der Fig. 4 in einem ersten Schaltzustand beim Ausfahren eines Hydraulikzylinders;
- Fig. 6: die hydraulische Schaltungsanordnung der Fig. 5 in dem ersten Schaltzustand beim Einfahren des Hydraulikzylinders; und
- Fig. 7: die hydraulische Schaltungsanordnung der Fig. 5 in einem zweiten Schaltzustand beim Ausfahren des Hydraulikzylinders.

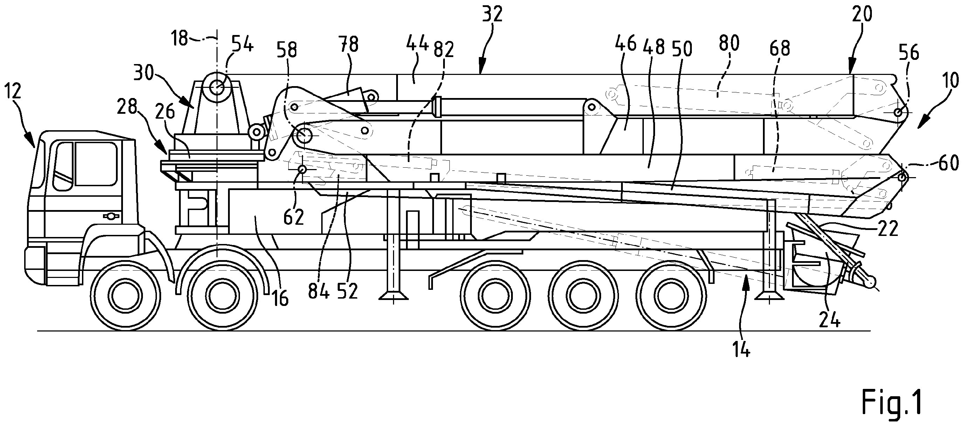

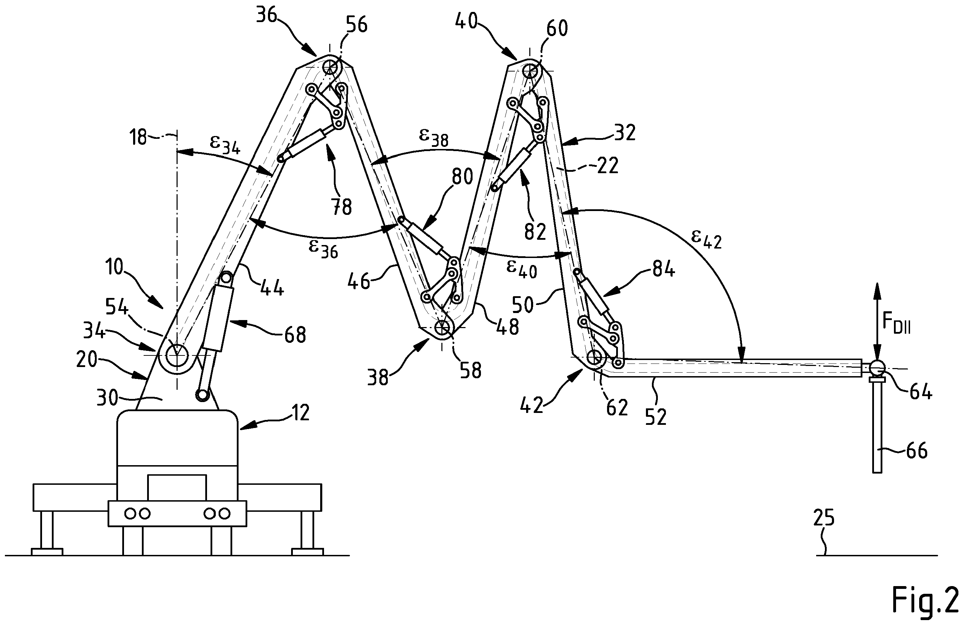

Die in der Fig. 1 gezeigte Autobetonpumpe 10 umfasst ein Transportfahrzeug 12 und enthält eine z. B. als Zweizylinderkolbenpumpe ausgebildete pulsierende Dickstoffpumpe 14 und einen Großmanipulator mit einem an einem fahrzeugfesten Gestell 16 aufgenommenen und um eine fahrzeugfeste Hochachse 18 an einem Drehgelenk 28 drehbaren Verteilermast 20. Der Verteilermast 20 trägt eine Betonförderleitung 22. Wie in der Fig. 2 ersichtlich ist, kann über die Förderleitung 22 Flüssigbeton, der in einen Aufgabebehälter 24 während des Betonierens fortlaufend eingebracht wird, zu einer von dem Standort des Fahrzeugs 12 entfernt angeordneten Betonierstelle 25 gefördert werden.

Der Verteilermast 20 umfasst einen drehbaren Mastbock 30, der mittels eines Antriebsaggregats 26, das als ein hydraulischer Drehantrieb ausgebildet ist, um die als eine Drehachse wirkende vertikale Hochachse 18 des Drehgelenks 28 gedreht werden kann. Der Verteilermast 20 enthält einen an dem Mastbock 30 schwenkbaren Knickmast 32, der auf variable Reichweite und Höhendifferenz zwischen dem Fahrzeug 12 und der Betonierstelle 25 kontinuierlich einstellbar ist. Der Knickmast 32 weist bei dem dargestellten Ausführungsbeispiel fünf durch Knickgelenke 34, 36, 38, 40, 42 gelenkig miteinander verbundene Mastarme 44, 46, 48, 50, 52 auf, die um parallel zueinander und rechtwinklig zur Hochachse 18 des Mastbocks 30 verlaufende Gelenkachsen 54, 56, 58, 60, 62 schwenkbar sind. Für das Bewegen der Mastarme um die Gelenkachsen 54, 56, 58, 60 und 62 der Knickgelenke 34, 36, 38, 40, 42 hat der Großmanipulator den Knickgelenken zugeordnete Antriebsaggregate 68, 78, 80, 82 und 84. Die Anordnung der Knickgelenke 34, 36, 38, 40, 42 und die bei dem Verteilermast durch Verstellen der Knickgelenke einstellbaren Knickwinkel εᵢ, i = 34, 36, 38, 40, 42 (Fig. 2) um die Gelenkachsen 54, 56, 58, 60, 62 ermöglichen, dass der Verteilermast 20 mit der aus Fig. 1 ersichtlichen, einer mehrfachen Faltung entsprechenden raumsparenden Transportkonfiguration auf dem Fahrzeug 12 ablegbar ist.

Der Knickmast 32 hat eine Mastspitze 64, an der ein Endschlauch 66 angeordnet ist, durch den Flüssigbeton aus der Förderleitung 22 des Verteilermasts 20 zu der Betonierstelle 25 ausgebracht werden kann.

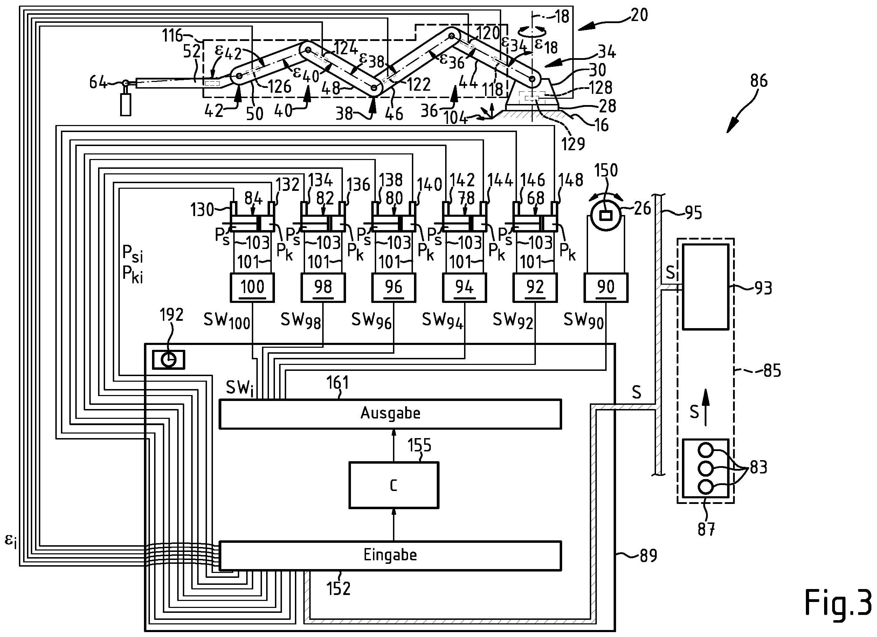

Um die Bewegung der Mastarme des Knickmasts 32 zu steuern, hat der Großmanipulator eine anhand der Fig. 3 nachfolgend erläuterte Steuereinrichtung 86. Die Steuereinrichtung 86 steuert die Bewegung des in der Fig. 2 gezeigten Knickmasts 32 mit Hilfe von Stellgliedern 90, 92, 94, 96, 98, 100 mit hydraulischen Schaltungsanordnungen für die den Knickgelenken 34, 36, 38, 40, 42 und dem Drehgelenk 28 zugeordneten Antriebsaggregate 26, 68, 78, 80, 82 und 84.

Durch programmgesteuerte Aktivierung der hydraulischen Antriebsaggregate 26, 68, 78, 80, 82 und 84, die den Gelenkachsen 54, 56, 58, 60 und 62 sowie der Drehachse 18 einzeln zugeordnet sind, ist der Knickmast 32 in unterschiedlichen Distanzen und/oder Höhendifferenzen zwischen der Betonierstelle 25 und dem Fahrzeugstandort entfaltbar.

Der Mastführer steuert den Verteilermast 20 z. B. mittels einer Steuerbaugruppe 85 mit einem Steuergerät 87. Das Steuergerät 87 ist als eine Fernsteuerung ausgebildet und enthält Bedienorgane 83 für das Verstellen des Verteilermasts 20 mit dem Knickmast 32, die Steuersignale S erzeugt, die einer Ansteuerbaugruppe 89 für das Ansteuern der Stellglieder 90, 92, 94, 96, 98, 100 in dem Großmanipulator zuführbar sind.

Die Steuersignale S werden über eine Funkstrecke 91 zu einem fahrzeugfesten Funkempfänger 93 übertragen, der ausgangsseitig über ein z. B. als CAN-Bus ausgebildetes Bussystem 95 an die Ansteuerbaugruppe 89 angeschlossen ist.

Die Steuereinrichtung 86 enthält eine erste Betriebszustands-Erfassungseinrichtung 116 für das Erfassen einer Betriebszustandsgröße des Großmanipulators, die Winkelsensoren 118, 120, 122, 124, 126 und 199 zum Ermitteln der Gelenkwinkel εᵢ, i = 34, 36, 38, 40, 42 der Knickgelenke 34 sowie eine Einrichtung 128 zum Ermitteln des Drehwinkels εᵢ, i = 18 um die Hochachse 18 des Drehgelenks 28 mit einem Winkelsensor 129 aufweist.

In der Steuereinrichtung 86 gibt es weitere Betriebszustands-Erfassungseinrichtungen 130, 132, 134, 136, 138, 140, 142, 144, 146, 148, die den hydraulischen Antriebsaggregaten 26, 68, 78, 80, 82 und 84 zugeordnet sind. Die Betriebszustands-Erfassungseinrichtungen 130, 132, 134, 136, 138, 140, 142, 144, 146, 148 sind Druckwandler, die einen erfassten Hydraulikdruck der Hydraulikflüssigkeit in einen elektrischen Strom wandeln. Die Betriebszustands-Erfassungseinrichtungen 130, 132, 134, 136, 138, 140, 142, 144, 146, 148 dienen für das Messen des stangengenseitigen Drucks p_{Si}, i = 130, 134, 138, 142, 146 und des kolbenseitigen Drucks p_{Ki} i = 132, 136, 140, 144, 148 der Hydraulikflüssigkeit in den Hydraulikzylindern 154. Die Betriebszustands-Erfassungseinrichtungen 130, 132, 134, 136, 138, 140, 142, 144, 146, 148 ermöglichen das Bestimmen der Ist-Kraft Fᵢ, i = 68, 78, 80, 82, 84, die mittels der Antriebsaggregate 68, 78, 80, 82 und 84 erzeugt und in die Mastarme 44, 46, 48, 50, 52 des Knickmasts 32 eingeleitet wird.

Für das als ein hydraulischer Drehantrieb ausgebildete Antriebsaggregat 26 weist die Steuereinrichtung 86 einen Drehmomentsensor 150 auf, der für das Erfassen des mittels des Drehantriebs in den Mastbock 30 als Drehmoment eingeleiteten Ist-Moments Mᵢ, i=18 ausgelegt ist. Zu bemerken ist, dass für das Erfassen des mittels des Drehantriebs in den Mastbock 30 als Drehmoment eingeleiteten Ist-Moments Mᵢ, i=18 auch eine Druckaufnehmeranordnung vorgesehen sein kann, die an den hydraulischen Drehantrieb angeschlossen ist und die den Hydraulikdruck der Hydraulikflüssigkeit in dem hydraulischen Drehantrieb bestimmt.

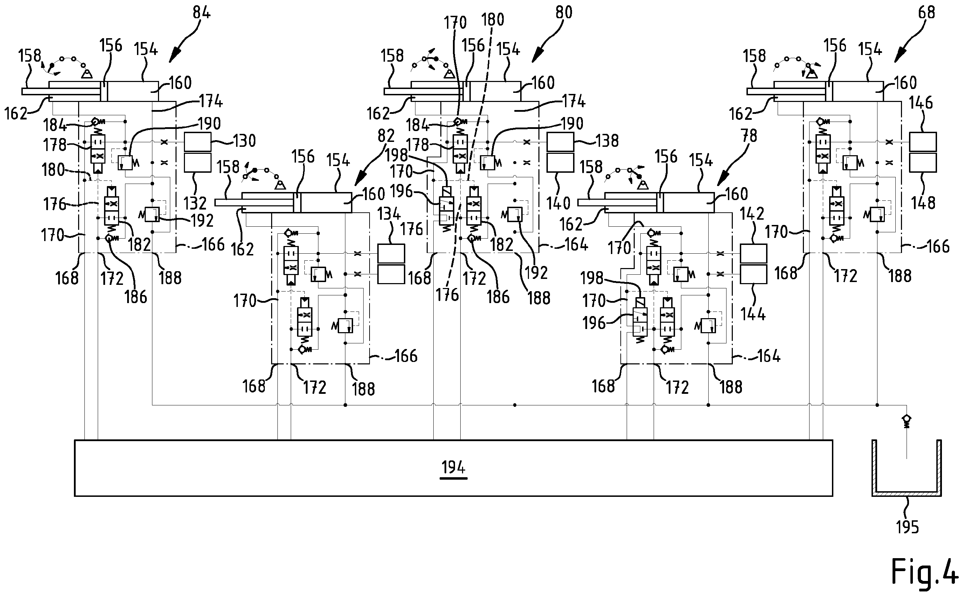

Die technische Funktion der Ansteuerbaugruppe 89 ist insbesondere das Einstellen von in der Fig. 4 gezeigten hydraulischen Schaltungsanordnungen 164, 166 der Stellglieder 90, 92, 94, 96, 98, 100 für den Antrieb der Antriebsaggregate 26, 68, 78, 80, 82 und 84.

Die Ansteuerbaugruppe 89 erzeugt aufgrund der Steuersignale S aus der Steuerbaugruppe 85 Stellsignale SWᵢ, i = 90, 92, 94, 96, 98 und 100 für die Stellglieder der Antriebsaggregate des Verteilermasts 20. Die Posen des Verteilermasts 20 werden durch Auswerten der Stellung der mittels der Winkelsensoren 118, 120, 122, 124 und 126 in der Betriebszustands-Erfassungseinrichtung 116 erfassten Gelenkwinkel εᵢ, i = 34, 36, 38, 40, 42 der Knickgelenke 34, 36, 38, 40, 42 und des mittels des Winkelsensors 129 erfassten Drehwinkels εᵢ, i = 18 des Mastbocks 30 um die Drehachse 18 durch Ansteuern der Stellglieder 90, 92, 94, 96, 98, 100 auf mit der Steuerbaugruppe 85 vorgebbare Sollwerte W_{Soll} eingestellt.

Dabei erfolgt das Ansteuern der Stellglieder 90, 92, 94, 96, 98, 100 abhängig von den mittels der Betriebszustands-Erfassungseinrichtung 116 erfassten Gelenkwinkel εᵢ, i = 34, 36, 38, 40, 42 der Knickgelenke 34, 36, 38, 40, 42 und den mittels der weiteren Betriebszustands-Erfassungseinrichtungen erfassten stangengenseitigen Drücke p_{Si}, i = 130, 134, 138, 142, 146 und kolbenseitigen Drücke p_{Ki} i = 132, 136, 140, 144, 148 der Hydraulikflüssigkeit in den Hydraulikzylindern.

Die Ansteuerbaugruppe 89 hat eine Eingaberoutine 152, mittels der die Betriebszustands-Erfassungseinrichtung 116 zum Ermitteln der Gelenkwinkel εᵢ, i = 18 der Knickgelenke 34, 36, 38, 40, 42 mit den Winkelsensoren 118, 120, 122, 124 und 126 und die Einrichtung 128 zum Ermitteln des Drehwinkels εᵢ, i = 18 um die Hochachse 18 des Drehgelenks 28 mit dem Winkelsensor 129 fortlaufend abgefragt wird. Die Eingaberoutine 152 erhält auch fortlaufend die Signale p_{Si}, p_{Ki} der als Druckwandler ausgebildeten Betriebszustands-Erfassungseinrichtungen 130, 132, 134, 136, 138, 140, 142, 144, 146, 148. Mittels der Eingaberoutine 152 werden außerdem die Steuersignale S aus der Steuerbaugruppe 85 eingelesen.

Die Ansteuerbaugruppe 89 enthält eine Rechenroutine 155, in der die fortlaufend zugeführten Betriebszustandsgrößen des Großmanipulators und die Steuersignals S der Ansteuerbaugruppe 89 zu Stellsignale SWᵢ, i = 90, 92, 94, 96, 98, 100 für die Stellglieder 90, 92, 94, 96, 98 und 100 verarbeitet werden.

Über eine Ausgaberoutine 161 werden die Stellsignale SWᵢ, i = 90, 92, 94, 96, 98, 100 für die Stellglieder 90, 92, 94, 96, 98 und 100 dann auf die Stellglieder 90, 92, 94, 96, 98 und 100 in dem Großmanipulator ausgegeben.

Die Fig. 4 zeigt einen hydraulischen Schaltkreis mit hydraulischen Schaltungsanordnungen 164, 166 der Stellglieder 92, 94, 96, 98, 100 für den Antrieb der hydraulischen Antriebsaggregate 68, 78, 80, 82 und 84. Die Antriebsaggregate 68, 78, 80, 82 und 84 haben jeweils einen Hydraulikzylinder 154 und einen in dem Hydraulikzylinder 154 bewegbar angeordneten Kolben 156 mit einer daran angeschlossenen Kolbenstange 158. In dem Hydraulikzylinder 154 ist ein mit Hydraulikflüssigkeit beaufschlagbares kolbenseitiges Arbeitsvolumen 160 und ein mit Hydraulikflüssigkeit beaufschlagbares stangenseitiges Arbeitsvolumen 162 ausgebildet.

Die hydraulischen Schaltungsanordnungen 164, 166 der Stellglieder 92, 94, 96, 98, 100 für die hydraulischen Antriebsaggregate 68, 78, 80, 82 und 84 haben jeweils einen ersten Arbeitsanschluss 168 für die Zufuhr oder Abfuhr der Hydraulikflüssigkeit durch einen an das stangenseitige Arbeitsvolumen 162 angeschlossenen ersten Fluidkanal 170. Die hydraulischen Schaltungsanordnungen 164, 166 weisen außerdem jeweils einen zweiten Arbeitsanschluss 172 auf, der für die Zufuhr oder Abfuhr der Hydraulikflüssigkeit durch einen zweiten Fluidkanal 174 dient, der an das kolbenseitigen Arbeitsvolumen 160 angeschlossen ist. Die hydraulischen Schaltungsanordnungen 164, 166 der Stellglieder 92, 94, 96, 98, 100 enthalten weiter jeweils ein erstes mittels Federkraft mechanisch vorgespanntes durch eine erste Drucksteuerleitung 176 hydraulisch angesteuertes Senkbremsventil 178 und ein zweites mittels Federkraft mechanisch vorgespanntes durch eine weitere Drucksteuerleitung 180 hydraulisch angesteuertes Senkbremsventil 182. Die erste Drucksteuerleitung 176 in den hydraulischen Schaltungsanordnungen 164, 166 kommuniziert dabei mit dem jeweils zweiten Arbeitsanschluss 172. Die weitere Drucksteuerleitung 180 ist auf einer dem stangenseitigen Arbeitsvolumen 162 abgewandten Seite des ersten Senkbremsventils 178 an den ersten Fluidkanal 170 angeschlossen.

Das erste Senkbremsventil 178 gibt in wenigstens einer ersten Schaltstellung den ersten Fluidkanal 170 durch eine darin integrierte Drossel frei, wenn der Hydraulikdruck in der ersten Drucksteuerleitung 176 einen Schwellwert überschreitet. Mittels der in das erste Senkbremsventil 178 integrierten Drossel wird die aus dem stangenseitigen Arbeitsvolumen 162 des Hydraulikzylinders 154 in der ersten Schaltstellung des ersten Senkbremsventils 178 austretende Hydraulikflüssigkeit vorgespannt. Das Vorspannen der aus dem stangenseitigen Arbeitsvolumen 162 des Hydraulikzylinders 154 in der ersten Schaltstellung des Senkbremsventils 178 austretenden Hydraulikflüssigkeit bewirkt, dass Druckschwankungen in dem hydraulischen Schaltkreis entgegengewirkt wird, so dass oszillatorische Bewegungen der Kolbenstange 158 unterbunden oder zumindest minimiert werden. In einer von der wenigstens einen ersten Schaltstellung verschiedenen zweiten Schaltstellung sperrt dagegen das erste Senkbremsventil 178 den ersten Fluidkanal 170.

Entsprechend gibt das zweite Senkbremsventil 182 in wenigstens einer ersten Schaltstellung den zweiten Fluidkanal 174 durch eine darin integrierte Drossel frei, wenn der Hydraulikdruck in der weiteren Drucksteuerleitung 180 einen Schwellwert überschreitet. Mittels der in das zweite Senkbremsventil 182 integrierten Drossel wird die aus dem kolbenseitigen Arbeitsvolumen 160 des Hydraulikzylinders 154 in der ersten Schaltstellung des zweiten Senkbremsventils 182 austretende Hydraulikflüssigkeit vorgespannt. Das Vorspannen der aus dem kolbenseitigen Arbeitsvolumen 160 des Hydraulikzylinders 154 in der ersten Schaltstellung des zweiten Senkbremsventils 182 austretende Hydraulikflüssigkeit bewirkt ebenfalls, dass Druckschwankungen in dem hydraulischen Schaltkreis entgegengewirkt wird, so dass oszillatorische Bewegungen der Kolbenstange 158 unterbunden oder zumindest minimiert werden. In einer von der wenigstens einen ersten Schaltstellung verschiedenen zweiten Schaltstellung sperrt dagegen das zweite Senkbremsventil 182 den zweiten Fluidkanal 174.

In den hydraulischen Schaltungsanordnungen 164, 166 der Stellglieder 92, 94, 96, 98, 100 gibt es jeweils ein zu dem ersten Senkbremsventil 178 parallel angeordnetes erstes Rückschlagventil 184, das den Rückfluss von Hydraulikflüssigkeit aus dem stangenseitigen Arbeitsvolumen 162 des Hydraulikzylinders 154 unterbindet, und ein zu dem zweiten Senkbremsventil 182 parallel angeordnetes zweites Rückschlagventil 186, das den Rückfluss von Hydraulikflüssigkeit aus dem kolbenseitigen Arbeitsvolumen 160 des Hydraulikzylinders 154 unterbindet.

Die hydraulischen Schaltungsanordnungen 164, 166 der Stellglieder 92, 94, 96, 98, 100 haben jeweils einen Überdruck-Anschluss 188 und ein erstes Überdruckventil 190, das den ersten Fluidkanal 170 auf der dem stangenseitigen Arbeitsvolumen 162 des Hydraulikzylinders 154 zugewandten Seite des ersten Senkbremsventils 178 bei einem Überdruck des hydraulischen Arbeitsmediums mit dem Überdruck-Anschluss 188 verbindet. In den hydraulischen Schaltungsanordnungen 164, 166 gibt es außerdem ein zweites Überdruckventil 192, das den zweiten Fluidkanal 174 auf der dem kolbenseitigen Arbeitsvolumen 160 des Hydraulikzylinders 154 zugewandten Seite des zweiten Senkbremsventils 182 bei einem Überdruck des hydraulischen Arbeitsmediums mit dem Überdruck-Anschluss 188 verbindet.

Die ersten Arbeitsanschlüsse 168 und die zweiten Arbeitsanschlüsse 172 der hydraulischen Schaltungsanordnungen 164, 166 der Stellglieder 92, 94, 96, 98, 100 sind mit einem Steuerblock 194 verbunden. Der Überdruck-Anschluss 188 der hydraulischen Schaltungsanordnungen 164, 166 kommuniziert dabei mit einem Tank 195 für die Hydraulikflüssigkeit in dem Großmanipulator.

Die hydraulischen Schaltungsanordnungen 164 der Stellglieder 92, 94 enthalten anders als die hydraulischen Schaltungsanordnungen 166 ein Bypassventil 196, das in einem ersten Schaltzustand den ersten Fluidkanal 170 mit dem ersten Arbeitsanschluss 168 für die Zufuhr oder Abfuhr der Hydraulikflüssigkeit verbindet und dabei den ersten Fluidkanal 170 von dem zweiten Fluidkanal 174 trennt. In einem von dem ersten Schaltzustand verschiedenen zweiten Schaltzustand verbindet das Bypassventil 196 den ersten Fluidkanal 170 auf der dem kolbenseitigen Arbeitsvolumen 160 abgewandten Seite des zweiten Senkbremsventils 182 mit dem zweiten Fluidkanal 174 und trennt dabei den ersten Fluidkanal 170 von dem ersten Arbeitsanschluss 168 für die Zufuhr oder Abfuhr des hydraulischen Arbeitsmediums. Das Bypassventil 196 in den hydraulischen Schaltungsanordnungen 164 der Stellglieder 92, 94 hat jeweils einen elektrischen Antrieb 198 für das Einstellen des ersten Schaltzustands und des zweiten Schaltzustands. In dem ersten Schaltzustand ist das Bypassventil 196 mechanisch vorgespannt.

Zu bemerken ist, dass in einer modifizierten Ausführungsform des hydraulischen Schaltkreises mit hydraulischen Schaltungsanordnungen für den Antrieb der hydraulischen Antriebsaggregate vorgesehen sein kann, den Drosselquerschnitt der in die Senkbremsventile 178, 182 integrierten Drossel einstellbar zu gestalten und in Abhängigkeit des Schaltzustands des Bypassventils 196 so einzustellen, dass der Drosselquerschnitt der in die Senkbremsventile 178, 182 integrierten Drossel in dem ersten Schaltzustand des Bypassventils 196 kleiner ist als in dem zweiten Schaltzustand des Bypassventils 196, wenn die Senkbremsventile 178, 182 in den ersten Schaltzustand geschaltet sind. Auf diese Weise lässt sich erreichen, dass die Vorspannung der aus dem kolbenseitigen bzw. stangenseitigen Arbeitsvolumen 160, 162 austretenden Hydraulikflüssigkeit nicht oder nur wenig zunimmt, wenn das Bypassventil 196 den ersten Fluidkanal 170 auf der dem kolbenseitigen Arbeitsvolumen 160 abgewandten Seite des zweiten Senkbremsventils 182 mit dem zweiten Fluidkanal 174 verbindet und dabei den ersten Fluidkanal 170 von dem ersten Arbeitsanschluss 168 für die Zufuhr oder Abfuhr des hydraulischen Arbeitsmediums trennt.

Zu bemerken ist auch, dass in einer weiteren modifizierten Ausführungsform des hydraulischen Schaltkreises mit hydraulischen Schaltungsanordnungen für den Antrieb der hydraulischen Antriebsaggregate auch alle oder nur ein Teil der dort vorgesehenen hydraulischen Schaltungsanordnungen oder in Bezug auf den Schaltkreis der Fig. 4 andere als die dort gezeigten hydraulischen Schaltungsanordnungen 164 ein Bypassventil enthalten können.

Die als Druckwandler ausgebildeten Betriebszustands-Erfassungseinrichtungen 130, 134, 138, 142 und 146 erfassen den Hydraulikdruck jeweils in einem zu dem stangenseitigen Arbeitsvolumen 162 der Hydraulikzylinder 154 offenen Abschnitt des ersten Fluidkanals 170. Mittels der als Druckwandler ausgebildeten weiteren Betriebszustands-Erfassungseinrichtungen 132, 136, 140, 144 und 148 wird der Hydraulikdruck in einem zu dem kolbenseitigen Arbeitsvolumen 160 der Hydraulikzylinder 154 offenen Abschnitt des zweiten Fluidkanals 174 erfasst.

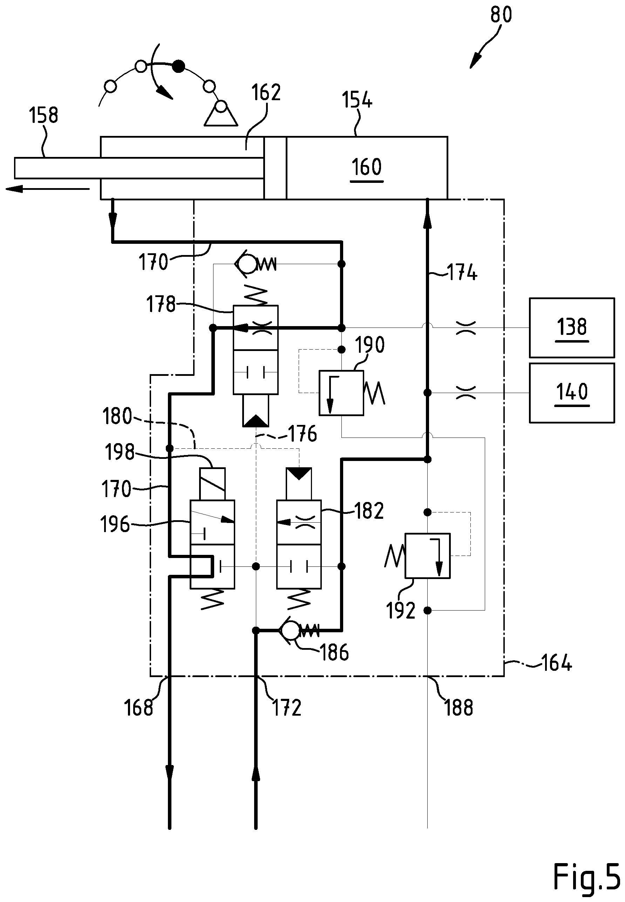

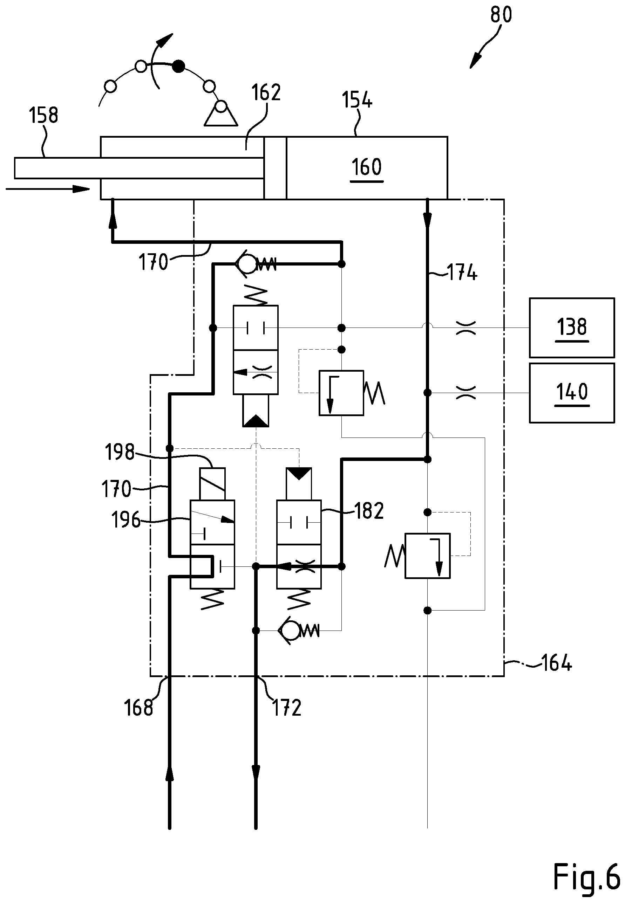

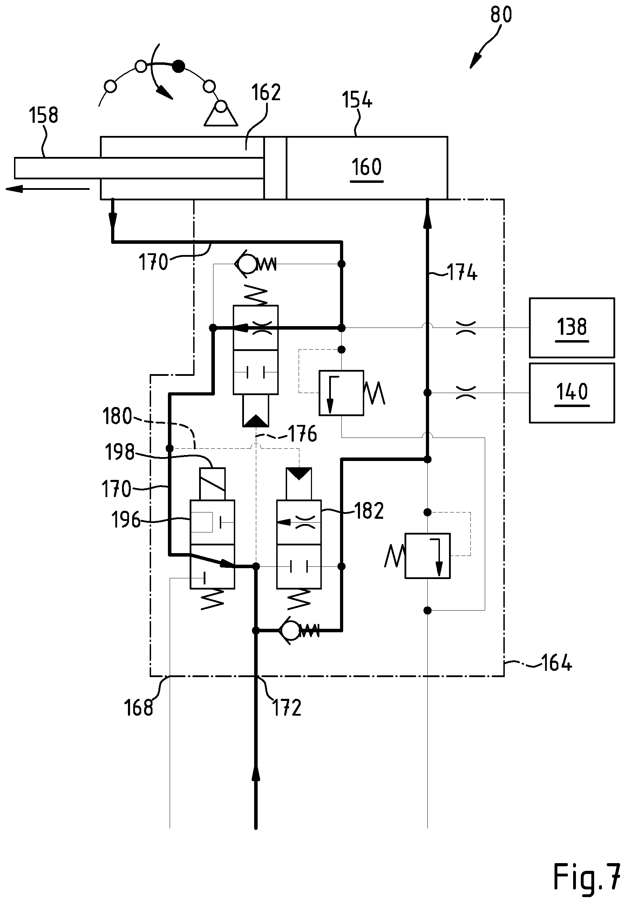

Die Fig. 5 zeigt eine hydraulische Schaltungsanordnung 164 beim Ausfahren des Hydraulikzylinders 154 in dem Antriebsaggregat 80, wenn das Bypassventil 196 in den ersten Schaltzustand geschaltet ist. Die Fig. 6 zeigt die hydraulische Schaltungsanordnung 164 beim Einfahren des Hydraulikzylinders 154, wenn sich das Bypassventil 196 ebenfalls in dem ersten Schaltzustand befindet. Die Fig. 7 zeigt die hydraulische Schaltungsanordnung 164 beim Ausfahren des Hydraulikzylinders 154, wenn das Bypassventil 196 in den zweiten Schaltzustand geschaltet ist.

Mittels der Steuereinrichtung 86 wird der elektrische Antrieb 198 für das Einstellen des ersten Schaltzustands und des zweiten Schaltzustands des Bypassventils 196 in Abhängigkeit der mittels der Betriebszustands-Erfassungseinrichtungen erfassten Betriebszustandsgrößen des Großmanipulators in Form des stangengenseitigen Drucks p_{Si}, i = 130, 134, 138, 142, 146 und des kolbenseitigen Drucks p_{Ki} i = 132, 136, 140, 144, 148 der Hydraulikflüssigkeit in den Hydraulikzylindern 154 und der Knickwinkel εᵢ, i = 34, 36, 38, 40, 42 (Fig. 2) um die Gelenkachsen 54, 56, 58, 60, 62 des Knickmasts gesteuert. In der Ansteuerbaugruppe 89 wird dazu aus den erfassten Betriebszustandsgrößen die mechanische Belastung der hydraulischen Antriebsaggregate 68, 78, 80, 82 und 84 ermittelt. Entsprechend der ermittelten mechanischen Belastung wird dann das Bypassventil 196 in die erste oder die zweite Schaltstellung geschaltet. Auf diese Weise lässt sich erreichen, dass für das Verstellen der Mastarme 44, 46, 48, 50 und 52 des Knickmasts in dem Großmanipulator bei einer geringen mechanischen Belastung der hydraulischen Antriebsaggregate 68, 78, 80, 82 und 84 in dem Großmanipulator mittels einer Hydraulikpumpe weniger Hydraulikflüssigkeit gefördert wird als es für das Verstellen der Mastarme 44, 46, 48, 50 und 52 in dem Großmanipulator bei einer großen mechanischen Belastung der hydraulischen Antriebsaggregate 68, 78, 80, 82 und 84 erforderlich ist.

### Bezugszeichenliste

- 10: Autobetonpumpe
- 12: Transportfahrzeug
- 14: Dickstoffpumpe
- 16: fahrzeugfestes Gestell
- 18: Drehachse (Hochachse)
- 20: Verteilermast
- 22: Betonförderleitung
- 24: Aufgabebehälter
- 25: Betonierstelle
- 26: Antriebsaggregat
- 28: Drehgelenk
- 30: Mastbock
- 32: Knickmast
- 34, 36, 38, 40, 42: Knickgelenke
- 44, 46, 48, 50, 52: Mastarme
- 54, 56, 58, 60, 62: Gelenkachsen
- 64: Mastarmstelle, z. B. Mastspitze
- 66: Endschlauch
- 68: Antriebsaggregat
- 78, 80, 82, 84: Antriebsaggregat
- 83: Bedienorgan
- 85: Steuerbaugruppe
- 86: Steuereinrichtung
- 87: Steuergerät
- 89: Ansteuerbaugruppe
- 90, 92, 94, 96, 98, 100: Stellglieder
- 91: Funkstrecke
- 93: Funkempfänger
- 95: Bussystem
- 116: Betriebszustands-Erfassungseinrichtung
- 118, 120, 122, 124, 126, 129, 199: Winkelsensor
- 128: Einrichtung zum Ermitteln des Drehwinkels
- 130, 132, 134, 136, 138, 140, 142, 144, 146, 148: Betriebszustands-Erfassungseinrichtung
- 150: Drehmomentsensor
- 152: Eingaberoutine
- 154: Hydraulikzylinder
- 155: Rechenroutine
- 156: Kolben
- 158: Kolbenstange
- 160: kolbenseitiges Arbeitsvolumen
- 161: Ausgaberoutine
- 162: stangenseitiges Arbeitsvolumen
- 164, 166: Schaltungsanordnung
- 168: erster Arbeitsanschluss
- 170: erster Fluidkanal
- 172: zweiter Arbeitsanschluss
- 174: zweiter Fluidkanal
- 176, 180: Drucksteuerleitung
- 178: erstes Senkbremsventil
- 182: zweites Senkbremsventil
- 184: erstes Rückschlagventil
- 186: zweites Rückschlagventil
- 188: Überdruck-Anschluss
- 190: erstes Überdruckventil
- 192: zweites Überdruckventil
- 194: Steuerblock
- 195: Tank
- 196: Bypassventil
- 198: elektrischer Antrieb
- p_{Ki}: kolbenseitiger Druck
- p_{Si}: stangenseitiger Druck
- S: Steuersignal
- SWᵢ: Stellsignal
- εᵢ: Winkel

## Patentansprüche

1. Großmanipulator für Betonpumpen, mit einem auf einem Gestell angeordneten, um eine vertikale Drehachse (18) drehbaren Mastbock (30), mit einem aus mindestens zwei Mastarmen (44, 46, 48, 50, 52) zusammengesetzten Knickmast (32), der eine Betonförderleitung (22) trägt, mit wenigstens einem hydraulischen Antriebsaggregat (26, 68, 78, 80, 82, 84) für das Verschwenken wenigstens eines der Mastarme (44, 46, 48, 50, 52) um eine horizontale Drehachse (54, 56, 58, 60, 62), das einen Hydraulikzylinder (154) und einen in dem Hydraulikzylinder (154) bewegbar angeordneten Kolben (156) mit einer daran angeschlossenen Kolbenstange (158) aufweist, wobei in dem Hydraulikzylinder (154) ein mit Hydraulikflüssigkeit beaufschlagbares kolbenseitiges Arbeitsvolumen (160) und ein mit Hydraulikflüssigkeit beaufschlagbares stangenseitiges Arbeitsvolumen (162) ausgebildet ist, und
mit einer hydraulischen Schaltungsanordnung (164) für den Antrieb des wenigstens einen hydraulischen Antriebsaggregats (26), die in einem ersten Schaltzustand einen ersten Arbeitsanschluss (168) für die Zufuhr oder Abfuhr der Hydraulikflüssigkeit durch einen ersten Fluidkanal (170) mit dem stangenseitigen Arbeitsvolumen (162) und einen zweiten Arbeitsanschluss (172) für die Zufuhr oder Abfuhr der Hydraulikflüssigkeit durch einen zweiten Fluidkanal (174) mit dem kolbenseitigen Arbeitsvolumen (160) verbindet,
**dadurch gekennzeichnet,**
**dass** die hydraulische Schaltungsanordnung (164) in einem von dem ersten Schaltzustand verschiedenen zweiten Schaltzustand den ersten Arbeitsanschluss (168) von dem ersten Fluidkanal (170) trennt und dabei den ersten Fluidkanal (170) an den zweiten Fluidkanal (174) für das Zuführen von Hydraulikflüssigkeit aus dem stangenseitigen Arbeitsvolumen (162) in das kolbenseitige Arbeitsvolumen (160) anschließt, und dass
wenigstens eine Betriebszustands-Erfassungseinrichtung (116, 130, 132, 134, 136, 138, 140, 142, 144, 146, 148) für das Erfassen wenigstens einer Betriebszustandsgröße des Großmanipulators und eine Ansteuerbaugruppe (89) für das Einstellen des Schaltzustands der wenigstens einen hydraulischen Schaltungsanordnung (164) in Abhängigkeit der wenigstens einen mittels der Betriebszustands-Erfassungseinrichtung (116, 130, 132, 134, 136, 138, 140, 142, 144, 146, 148) erfassten Betriebszustandsgröße des Großmanipulators sowie eine Einrichtung für das Zuführen eines mittels der Betriebszustands-Erfassungseinrichtung (116, 130, 132, 134, 136, 138, 140, 142, 144, 146, 148) erfassten Betriebszustandsgröße des Großmanipulators an die Ansteuerbaugruppe (89) für das betriebszustandsabhängige Einstellen des Schaltzustands der wenigstens einen hydraulischen Schaltungsanordnung (164), wobei
die wenigstens eine Betriebszustands-Erfassungseinrichtung für das Erfassen wenigstens einer Betriebszustandsgröße des Großmanipulators aus der Gruppe Knickmast-Pose und Winkelstellung eines Mastarms (44, 46, 48, 50, 52) ausgebildet ist.

2. Großmanipulator nach Anspruch 1, **dadurch gekennzeichnet, dass** die wenigstens eine Betriebszustands-Erfassungseinrichtung auch für das Erfassen wenigstens einer Betriebszustandsgröße des Großmanipulators aus der Gruppe Knickmast-Bewegungszustand, Knickmast-Belastung, Belastung eines Mastarms des Knickmasts, Betonpumpen-Betriebszustand, Hydraulikdruck in dem stangenseitigen Arbeitsvolumen des Hydraulikzylinders des wenigstens einen hydraulischen Antriebsaggregats, Hydraulikdruck in dem kolbenseitigen Arbeitsvolumen des Hydraulikzylinders des wenigstens einen hydraulischen Antriebsaggregats ausgebildet ist.

3. Großmanipulator nach Anspruch 1 oder 2, **dadurch gekennzeichnet, dass** die wenigstens eine Betriebszustands-Erfassungseinrichtung (130, 132, 134, 136, 138, 140, 142, 144, 146, 148) für das Erfassen wenigstens einer Betriebszustandsgröße des Großmanipulators als ein Druckwandler für das Erfassen des Hydraulikdrucks in einem zu dem stangenseitigen Arbeitsvolumen (162) des Hydraulikzylinders (154) offenen Abschnitt des ersten Fluidkanals (170) ausgebildet ist.

4. Großmanipulator nach Anspruch 3, **dadurch gekennzeichnet, dass** die wenigstens eine Betriebszustands-Erfassungseinrichtung (130, 132, 134, 136, 138, 140, 142, 144, 146, 148) den Hydraulikdruck in einem zu dem kolbenseitigen Arbeitsvolumen (160) des Hydraulikzylinders (154) offenen Abschnitt des zweiten Fluidkanals (174) erfasst.

5. Großmanipulator nach einem der Ansprüche 1 bis 4, **dadurch gekennzeichnet, dass** die hydraulische Schaltungsanordnung (164) enthält:
ein durch eine mit dem zweiten Arbeitsanschluss (172) für die Zufuhr oder Abfuhr der Hydraulikflüssigkeit kommunizierende erste Drucksteuerleitung (176) hydraulisch angesteuertes und in eine erste Schaltstellung vorgespanntes erstes Senkbremsventil (178), das in der ersten Schaltstellung den ersten Fluidkanal (170) freigibt, wenn der Hydraulikdruck in der ersten Drucksteuerleitung (176) einen Schwellwert überschreitet, und das in wenigstens einer von der ersten Schaltstellung verschiedenen zweiten Schaltstellung den ersten Fluidkanal (170) sperrt, wenn der Hydraulikdruck in der Drucksteuerleitung (176) den Schwellwert unterschreitet,
ein zu dem ersten Senkbremsventil (178) parallel angeordnetes erstes Rückschlagventil (184), das den Rückfluss von Hydraulikflüssigkeit aus dem stangenseitigen Arbeitsvolumen (162) des Hydraulikzylinders (154) unterbindet,
ein durch eine mit dem ersten Fluidkanal (170) auf einer dem stangenseitigen Arbeitsvolumen (162) abgewandten Seite des ersten Senkbremsventils (178) kommunizierende weitere Drucksteuerleitung (180) hydraulisch angesteuertes und in eine erste Schaltstellung vorgespanntes zweites Senkbremsventil (182), das den zweiten Fluidkanal (174) freigibt, wenn der Hydraulikdruck in der weiteren Drucksteuerleitung (180) einen Schwellwert überschreitet, und das in wenigstens einer von der ersten Schaltstellung verschiedenen zweiten Schaltstellung den zweiten Fluidkanal (174) sperrt, wenn der Hydraulikdruck in der weiteren Drucksteuerleitung (180) den Schwellwert unterschreitet,
ein zu dem zweiten Senkbremsventil (182) parallel angeordnetes zweites Rückschlagventil (186), das den Rückfluss von Hydraulikflüssigkeit aus dem kolbenseitigen Arbeitsvolumen (160) des Hydraulikzylinders (154) zu dem zweiten Arbeitsanschluss (172) für die Zufuhr oder Abfuhr der Hydraulikflüssigkeit unterbindet, und
ein Bypassventil (196), das in einem ersten Schaltzustand den ersten Fluidkanal (170) mit dem ersten Arbeitsanschluss (168) für die Zufuhr oder Abfuhr der Hydraulikflüssigkeit verbindet und dabei den ersten Fluidkanal (170) von dem zweiten Fluidkanal (174) trennt und das in einem von dem ersten Schaltzustand verschiedenen zweiten Schaltzustand den ersten Fluidkanal (170) auf der dem kolbenseitigen Arbeitsvolumen (160) abgewandten Seite des zweiten Senkbremsventils (182) an den zweiten Fluidkanal (174) anschließt und dabei den ersten Fluidkanal (170) von dem ersten Arbeitsanschluss (168) für die Zufuhr oder Abfuhr des hydraulischen Arbeitsmediums trennt.

6. Großmanipulator nach Anspruch 5, **dadurch gekennzeichnet, dass** das Bypassventil (196) einen elektrischen Antrieb (198) oder einen hydraulischen Antrieb oder einen pneumatischen Antrieb oder einen mechanischen Antrieb für das Einstellen des ersten Schaltzustands und des zweiten Schaltzustands hat.

7. Großmanipulator nach Anspruch 6, **dadurch gekennzeichnet, dass** das Bypassventil (196) in den ersten Schaltzustand mechanisch oder hydraulisch oder pneumatisch oder elektrisch vorgespannt ist.

8. Großmanipulator nach einem der Ansprüche 1 bis 7, **gekennzeichnet durch** einen Überdruck-Anschluss (188) und ein erstes Überdruckventil (190), das den ersten Fluidkanal (170) auf der dem stangenseitigen Arbeitsvolumen (162) des Hydraulikzylinders (154) zugewandten Seite des ersten Senkbremsventils (178) bei einem Überdruck des hydraulischen Arbeitsmediums mit dem Überdruck-Anschluss (188) verbindet, und ein zweites Überdruckventil (192), das den zweiten Fluidkanal (174) auf der dem kolbenseitigen Arbeitsvolumen (160) des Hydraulikzylinders (154) zugewandten Seite des ersten Senkbremsventils (178) bei einem Überdruck des hydraulischen Arbeitsmediums mit dem Überdruck-Anschluss (188) verbindet.

9. Verfahren zum Betrieb eines Großmanipulators für Betonpumpen, mit einem auf einem Gestell (16) angeordneten, um eine vertikale Drehachse (18) drehbaren Mastbock (30), mit einem aus mindestens zwei Mastarmen (44, 46, 48, 50, 52) zusammengesetzten Knickmast (32), der eine Betonförderleitung (22) trägt, und mit wenigstens einem hydraulischen Antriebsaggregat (26, 68, 78, 80, 82, 84) für das Verschwenken wenigstens eines der Mastarme (44, 46, 48, 50, 52) um eine horizontale Drehachse (54, 56, 58, 60, 62), das einen Hydraulikzylinder (154) und einen in dem Hydraulikzylinder (154) bewegbar angeordneten Kolben (156) mit einer daran angeschlossenen Kolbenstange (158) aufweist, wobei in dem Hydraulikzylinder (154) ein durch einen ersten Fluidkanal (170) mit Hydraulikflüssigkeit beaufschlagbares stangenseitiges Arbeitsvolumen (162) und ein durch einen zweiten Fluidkanal (174) mit Hydraulikflüssigkeit beaufschlagbares kolbenseitiges Arbeitsvolumen (160) ausgebildet ist,
**dadurch gekennzeichnet, dass**
wenigstens eine Betriebszustandsgröße des Großmanipulators erfasst wird und in Abhängigkeit der erfassten Betriebszustandsgröße entweder der erste Fluidkanal (170) mit einem ersten Arbeitsanschluss (168) für die Zufuhr oder Abfuhr der Hydraulikflüssigkeit verbunden und dabei der erste Fluidkanal (170) von dem zweiten Fluidkanal (174) getrennt wird oder der erste Fluidkanal (170) an den zweiten Fluidkanal (174) angeschlossen und dabei der erste Fluidkanal (170) von dem ersten Arbeitsanschluss (168) für die Zufuhr oder Abfuhr des hydraulischen Arbeitsmediums getrennt wird, wobei die wenigstens eine erfasste Betriebszustandsgröße des Großmanipulators eine Betriebszustandsgröße ist aus der Gruppe Knickmast-Pose und Winkelstellung eines Mastarms.

10. Verfahren nach Anspruch 9, **dadurch gekennzeichnet, dass** zusätzlich auch wenigstens eine Betriebszustandsgröße des Großmanipulators aus der Gruppe Knickmast-Bewegungszustand, Knickmast-Belastung, Belastung eines Mastarms des Knickmasts, Betonpumpen-Betriebszustand, Hydraulikdruck in dem stangenseitigen Arbeitsvolumen des Hydraulikzylinders des wenigstens einen hydraulischen Antriebsaggregats, Hydraulikdruck in dem kolbenseitigen Arbeitsvolumen des Hydraulikzylinders des wenigstens einen hydraulischen Antriebsaggregats erfasst wird, um in deren Abhängigkeit den ersten Fluidkanal von dem zweiten Fluidkanal zu trennen oder den ersten Fluidkanal an den zweiten Fluidkanal anzuschließen und dabei den ersten Fluidkanal von dem ersten Arbeitsanschluss für die Zufuhr oder Abfuhr des hydraulischen Arbeitsmediums zu trennen.

## Claims

1. A large manipulator for concrete pumps, having a boom pedestal (30) which is arranged on a frame and which is rotatable about a vertical axis of rotation (18), having an articulated boom (32) which is made up of at least two boom arms (44, 46, 48, 50, 52) and which bears a concrete conveying line (22), having at least one hydraulic drive unit (26, 68, 78, 80, 82, 84) for pivoting at least one of the boom arms (44, 46, 48, 50, 52) about a horizontal axis of rotation (54, 56, 58, 60, 62), which at least one hydraulic drive unit has a hydraulic cylinder (154) and a piston (156) which is arranged movably in the hydraulic cylinder (154) and which has a piston rod (158) connected thereto, wherein, in the hydraulic cylinder (154), there are formed a piston-side working volume (160), which can be charged with hydraulic fluid, and a rod-side working volume (162), which can be charged with hydraulic fluid, and
having a hydraulic circuit arrangement (164) for driving the at least one hydraulic drive unit (26), which hydraulic circuit arrangement, in a first switching state, connects a first working port (168) for the feed or discharge of the hydraulic fluid by means of a first fluid channel (170) to the rod-side working volume (162) and a second working port (172) for the feed or discharge of the hydraulic fluid by means of a second fluid channel (174) to the piston-side working volume (160),
**characterized**
**in that** the hydraulic circuit arrangement (164), in a second switching state which differs from the first switching state, separates the first working port (168) from the first fluid channel (170) and in so doing connects the first fluid channel (170) to the second fluid channel (174) for the feed of hydraulic fluid from the rod-side working volume (162) into the piston-side working volume (160), and in that
at least one operating state acquisition device (116, 130, 132, 134, 136, 138, 140, 142, 144, 146, 148) for acquiring at least one operating state variable of the large manipulator, and an activation assembly (89) for setting the switching state of the at least one hydraulic circuit arrangement (164) in a manner dependent on the at least one operating state variable of the large manipulator as acquired by means of the operating state acquisition device (116, 130, 132, 134, 136, 138, 140, 142, 144, 146, 148), and a device for feeding an operating state variable of the large manipulator as acquired by means of the operating state acquisition device (116, 130, 132, 134, 136, 138, 140, 142, 144, 146, 148) to the activation assembly (89) for the setting of the switching state of the at least one hydraulic circuit arrangement (164) in a manner dependent on the operating state, wherein
the at least one operating state acquisition device is designed to acquire at least one operating state variable of the large manipulator from the group comprising articulated boom posture and angular position of a boom arm (44, 46, 48, 50, 52).

2. The large manipulator as claimed in claim 1, **characterized in that** the at least one operating state acquisition device is also designed to acquire at least one operating state variable of the large manipulator from the group comprising articulated boom movement state, articulated boom loading, loading of a boom arm of the articulated boom, concrete pump operating state, hydraulic pressure in the rod-side working volume of the hydraulic cylinder of the at least one hydraulic drive unit, hydraulic pressure in the piston-side working volume of the hydraulic cylinder of the at least one hydraulic drive unit.

3. The large manipulator as claimed in claim 1 or 2, **characterized in that** the at least one operating state acquisition device (130, 132, 134, 136, 138, 140, 142, 144, 146, 148) for acquiring at least one operating state variable of the large manipulator is designed as a pressure transducer for acquiring the hydraulic pressure in a portion of the first fluid channel (170) which is open to the rod-side working volume (162) of the hydraulic cylinder (154).

4. The large manipulator as claimed in claim 3, **characterized in that** the at least one operating state acquisition device (130, 132, 134, 136, 138, 140, 142, 144, 146, 148) acquires the hydraulic pressure in a portion of the second fluid channel (174) which is open to the piston-side working volume (160) of the hydraulic cylinder (154).

5. The large manipulator as claimed in any of claims 1 to 4, **characterized in that** the hydraulic circuit arrangement (164) comprises:
a first lowering brake valve (178), which first lowering brake valve is hydraulically activated by means of a first pressure control line (176) which communicates with the second working port (172) for the feed or discharge of the hydraulic fluid, and which first lowering brake valve is preloaded into a first switching position, and which first lowering brake valve, in the first switching position, opens up the first fluid channel (170) if the hydraulic pressure in the first pressure control line (176) overshoots a threshold value, and which first lowering brake valve, in at least one second switching position which differs from the first switching position, shuts off the first fluid channel (170) if the hydraulic pressure in the pressure control line (176) falls below the threshold value,
a first check valve (184) which is arranged in parallel with respect to the first lowering brake valve (178) and which prevents the backflow of hydraulic fluid out of the rod-side working volume (162) of the hydraulic cylinder (154),
a second lowering brake valve (182), which second lowering brake valve is hydraulically activated by means of a further pressure control line (180) which communicates with the first fluid channel (170) on a side of the first lowering brake valve (178) averted from the rod-side working volume (162), and which second lowering brake valve is preloaded into a first switching position, and which second lowering brake valve opens up the second fluid channel (174) if the hydraulic pressure in the further pressure control line (180) overshoots a threshold value, and which second lowering brake valve, in at least one second switching position which differs from the first switching position, shuts off the second fluid channel (174) if the hydraulic pressure in the further pressure control line (180) falls below the threshold value,
a second check valve (186) which is arranged in parallel with respect to the second lowering brake valve (182) and which prevents the backflow of hydraulic fluid out of the piston-side working volume (160) of the hydraulic cylinder (154) to the second working port (172) for the feed or discharge of the hydraulic fluid, and
a bypass valve (196), which bypass valve, in a first switching state, connects the first fluid channel (170) to the first working port (168) for the feed or discharge of the hydraulic fluid, and in so doing separates the first fluid channel (170) from the second fluid channel (174), and which bypass valve, in a second switching state which differs from the first switching state, connects the first fluid channel (170) on that side of the second lowering brake valve (182) which is averted from the piston-side working volume (160) to the second fluid channel (174), and in so doing separates the first fluid channel (170) from the first working port (168) for the feed or discharge of the hydraulic working medium.

6. The large manipulator as claimed in claim 5, **characterized in that** the bypass valve (196) has an electric drive (198) or a hydraulic drive or a pneumatic drive or a mechanical drive for the setting of the first switching state and of the second switching state.

7. The large manipulator as claimed in claim 6, **characterized in that** the bypass valve (196) is mechanically or hydraulically or pneumatically or electrically preloaded into the first switching state.

8. The large manipulator as claimed in any of claims 1 to 7, **characterized by** an overpressure port (188) and a first overpressure valve (190), which connects the first fluid channel (170) on that side of the first lowering brake valve (178) which faces toward the rod-side working volume (162) of the hydraulic cylinder (154) to the overpressure port (188) in the presence of an overpressure of the hydraulic working medium, and a second overpressure valve (192), which connects the second fluid channel (174) on that side of the first lowering brake valve (178) which faces toward the piston-side working volume (160) of the hydraulic cylinder (154) to the overpressure port (188) in the presence of an overpressure of the hydraulic working medium.

9. A method for operating a large manipulator for concrete pumps, having a boom pedestal (30) which is arranged on a frame (16) and which is rotatable about a vertical axis of rotation (18), having an articulated boom (32) which is made up of at least two boom arms (44, 46, 48, 50, 52) and which bears a concrete conveying line (22), and having at least one hydraulic drive unit (26, 68, 78, 80, 82, 84) for pivoting at least one of the boom arms (44, 46, 48, 50, 52) about a horizontal axis of rotation (54, 56, 58, 60, 62), which at least one hydraulic drive unit has a hydraulic cylinder (154) and a piston (156) which is arranged movably in the hydraulic cylinder (154) and which has a piston rod (158) connected thereto, wherein, in the hydraulic cylinder (154), there are formed a rod-side working volume (162), which can be charged with hydraulic fluid by means of a first fluid channel (170), and a piston-side working volume (160), which can be charged with hydraulic fluid by means of a second fluid channel (174),
**characterized in that**
at least one operating state variable of the large manipulator is acquired and, in a manner dependent on the acquired operating state variable, either the first fluid channel (170) is connected to a first working port (168) for the feed or discharge of the hydraulic fluid, and in the process the first fluid channel (170) is separated from the second fluid channel (174), or the first fluid channel (170) is connected to the second fluid channel (174), and in the process the first fluid channel (170) is separated from the first working port (168) for the feed or discharge of the hydraulic working medium, wherein
the at least one acquired operating state variable of the large manipulator is an operating state variable from the group comprising articulated boom posture and angular position of a boom arm.

10. The method as claimed in claim 9, **characterized in that**, additionally, at least one operating state variable of the large manipulator from the group comprising articulated boom movement state, articulated boom loading, loading of a boom arm of the articulated boom, concrete pump operating state, hydraulic pressure in the rod-side working volume of the hydraulic cylinder of the at least one hydraulic drive unit, hydraulic pressure in the piston-side working volume of the hydraulic cylinder of the at least one hydraulic drive unit is also acquired in order, in a manner dependent thereon, to separate the first fluid channel from the second fluid channel or to connect the first fluid channel to the second fluid channel and in so doing to separate the first fluid channel from the first working port for the feed or discharge of the hydraulic working medium.

## Revendications

1. Grand manipulateur destiné à des pompes à béton, comportant un support de mât (30) disposé sur un châssis et pouvant tourner sur un axe de rotation vertical (18), un mât articulé (32) composé d'au moins deux bras de mât (44, 46, 48, 50, 52) et portant une conduite d'alimentation en béton (22), au moins une unité d'entraînement hydraulique (26, 68, 78, 80, 82, 84) destinée à faire pivoter au moins l'un des bras de mât (44, 46, 48, 50, 52) sur un axe de rotation horizontal (54, 56, 58, 60, 62) et comportant un cylindre hydraulique (154) et un piston (156) disposé mobile dans le cylindre hydraulique (154) et comportant une tige de piston (158) reliée à celui-ci, un volume de travail côté piston (160) pouvant être alimenté en fluide hydraulique et un volume de travail côté tige (162) pouvant être alimenté en fluide hydraulique étant formés dans le cylindre hydraulique (154), et
comportant un ensemble de circuit (164) hydraulique destiné à entraîner l'au moins une unité d'entraînement hydraulique (26), laquelle relie, dans un premier état de commutation, un premier raccord de travail (168) au volume de travail côté tige (162) par un premier canal de fluide (170) pour amener ou évacuer le fluide hydraulique et un second raccord de travail (172) au volume de travail côté piston (160) par un second canal de fluide (174) pour amener ou évacuer le fluide hydraulique,
**caractérisé en ce**
**que** l'ensemble de circuit (164) hydraulique sépare, dans un second état de commutation différent du premier état de commutation, le premier raccord de travail (168) du premier canal de fluide (170) et raccorde ainsi le premier canal de fluide (170) au second canal de fluide (174) afin d'amener le fluide hydraulique depuis le volume de travail côté tige (162) vers le volume de travail côté piston (160), et **caractérisé par**
au moins un dispositif de détection d'état de fonctionnement (116, 130, 132, 134, 136, 138, 140, 142, 144, 146, 148) destiné à détecter au moins une variable d'état de fonctionnement du grand manipulateur et un module de commande (89) destiné à régler l'état de commutation de l'au moins un ensemble de circuit (164) hydraulique en fonction de l'au moins une variable d'état de fonctionnement du grand manipulateur détectée au moyen du dispositif de détection d'état de fonctionnement (116, 130, 132, 134, 136, 138, 140, 142, 144, 146, 148) et un dispositif destiné à amener une variable d'état de fonctionnement du grand manipulateur, détectée au moyen du dispositif de détection d'état de fonctionnement (116, 130, 132, 134, 136, 138, 140, 142, 144, 146, 148), au module de commande (89) pour régler, selon l'état de fonctionnement, l'état de commutation de l'au moins un ensemble de circuit (164) hydraulique,
l'au moins un dispositif de détection d'état de fonctionnement destiné à détecter au moins une variable d'état de fonctionnement du grand manipulateur étant formé par le groupe de pose de mât articulé et la position angulaire d'un bras de mât (44, 46, 48, 50, 52).

2. Grand manipulateur selon la revendication 1, **caractérisé en ce que** l'au moins un dispositif de détection d'état de fonctionnement est également utilisé pour détecter au moins une variable d'état de fonctionnement du grand manipulateur du groupe d'état de mouvement de mât articulé, de charge de mât articulé, de charge sur un bras de mât du mât articulé, d'état de fonctionnement des pompes à béton, de pression hydraulique dans le volume de travail côté tige du cylindre hydraulique de l'au moins une unité d'entraînement hydraulique, de la pression hydraulique dans le volume de travail côté piston du cylindre hydraulique de l'au moins une unité d'entraînement hydraulique.

3. Grand manipulateur selon la revendication 1 ou 2, **caractérisé en ce que** l'au moins un dispositif de détection d'état de fonctionnement (130, 132, 134, 136, 138, 140, 142, 144, 146, 148) destiné à détecter au moins une variable d'état de fonctionnement du grand manipulateur est formé comme transducteur de pression destiné à détecter la pression hydraulique dans une section du premier canal de fluide (170) ouverte sur le volume de travail côté tige (162) du cylindre hydraulique (154).

4. Grand manipulateur selon la revendication 3, **caractérisé en ce que** l'au moins un dispositif de détection d'état de fonctionnement (130, 132, 134, 136, 138, 140, 142, 144, 146, 148) détecte la pression hydraulique dans une section du second canal de fluide (174) ouverte sur le volume de travail côté piston (160) du cylindre hydraulique (154).

5. Grand manipulateur selon l'une des revendications 1 à 4, **caractérisé en ce que** l'ensemble de circuit (164) hydraulique contient :
une première soupape de freinage d'abaissement (178), laquelle est commandée hydrauliquement par une première conduite de commande de pression (176) qui communique avec le second raccord de travail (172) pour amener ou évacuer le fluide hydraulique et est précontrainte dans une première position de commutation, laquelle soupape de freinage d'abaissement libère le premier canal de fluide (170) dans la première position de commutation lorsque la pression hydraulique dans la première conduite de commande de pression (176) dépasse une valeur seuil, et bloque le premier canal de fluide (170) dans au moins une seconde position de commutation différente de la première position de commutation lorsque la pression hydraulique dans la conduite de commande de pression (176) tombe en dessous de la valeur seuil, une soupape anti-retour (184) disposée parallèle à la première soupape de freinage d'abaissement (178) et empêchant le reflux du fluide hydraulique depuis le volume de travail côté tige (162) du cylindre hydraulique (154),
une seconde soupape de freinage d'abaissement (182), laquelle est commandée hydrauliquement par une autre conduite de commande de pression (180) qui communique avec le premier canal de fluide (170) sur un côté de la première soupape de freinage d'abaissement (178) détourné du volume de travail côté tige (162) et précontrainte dans une première position de commutation, laquelle seconde soupape de freinage d'abaissement libère le second canal de fluide (174) lorsque la pression hydraulique dans l'autre conduite de commande de pression (180) dépasse une valeur seuil, et bloque le second canal de fluide (174) dans au moins une seconde position de commutation différente de la première position de commutation lorsque la pression hydraulique dans l'autre conduite de commande de pression (180) tombe en dessous de la valeur seuil,
une seconde soupape anti-retour (186) disposée parallèle à la seconde soupape de freinage d'abaissement (182) et empêchant le reflux du fluide hydraulique depuis le volume de travail côté piston (160) du cylindre hydraulique (154) vers le second raccord de travail (172) pour amener ou évacuer le fluide hydraulique, et
une soupape de contournement (196) qui relie, dans un premier état de commutation, le premier canal de fluide (170) au premier raccord de travail (168) pour amener ou évacuer le fluide hydraulique et sépare ainsi le premier canal de fluide (170) du second canal de fluide (174) et qui raccorde, dans un second état de commutation différent du premier état de commutation, le premier canal de fluide (170) au second canal de fluide (174) sur le côté de la seconde soupape de freinage d'abaissement (182) détournée du volume de travail côté piston (160) et sépare ainsi le premier canal de fluide (170) du premier raccord de travail (168) pour amener ou évacuer le milieu de travail hydraulique.

6. Grand manipulateur selon la revendication 5, **caractérisé en ce que** la soupape de contournement (196) présente un entraînement électrique (198) ou un entraînement hydraulique ou un entraînement pneumatique ou un entraînement mécanique pour régler le premier état de commutation et le second état de commutation.

7. Grand manipulateur selon la revendication 6, **caractérisé en ce que** la soupape de contournement (196) est précontrainte mécaniquement ou hydrauliquement ou pneumatiquement ou électriquement dans le premier état de commutation.

8. Grand manipulateur selon l'une des revendications 1 à 7, **caractérisé par** un raccord de surpression (188) et une première soupape de surpression (190) qui relie le premier canal de fluide (170) au raccord de surpression (188) sur le côté de la première soupape de freinage d'abaissement (178) faisant face au volume de travail côté tige (162) du cylindre hydraulique (154) lors d'une surpression du milieu de travail hydraulique, et une seconde soupape de surpression (192) qui relie le second canal de fluide (174) au raccord de surpression (188) sur le côté de la première soupape de freinage d'abaissement (178) faisant face au volume de travail côté piston (160) du cylindre hydraulique (154) lors d'une surpression du milieu de travail hydraulique.

9. Procédé de fonctionnement d'un grand manipulateur destiné à des pompes à béton, comportant un support de mât (30) disposé sur un châssis (16) et pouvant tourner sur un axe de rotation vertical (18), un mât articulé (32) composé d'au moins deux bras de mât (44, 46, 48, 50, 52) et portant une conduite d'alimentation en béton (22), et au moins une unité d'entraînement hydraulique (26, 68, 78, 80, 82, 84) destinée à faire pivoter au moins l'un des bras de mât (44, 46, 48, 50, 52) sur un axe de rotation horizontal (54, 56, 58, 60, 62) et comportant un cylindre hydraulique (154) et un piston (156) disposé mobile dans le cylindre hydraulique (154) et comportant une tige de piston (158) reliée à celui-ci, un volume de travail côté tige (162) pouvant être alimenté en fluide hydraulique par le premier canal de fluide (170) et un volume de travail côté piston (160) pouvant être alimenté en fluide hydraulique par un second canal de fluide (174) étant formés dans le cylindre hydraulique (154),
**caractérisé en ce**
**qu'**au moins une variable d'état de fonctionnement du grand manipulateur est détectée et, en fonction de la variable d'état de fonctionnement détectée, soit le premier canal de fluide (170) est relié à un premier raccord de travail (168) pour amener ou évacuer le fluide hydraulique et le premier canal de fluide (170) est ainsi séparé du second canal de fluide (174), soit le premier canal de fluide (170) est raccordé au second canal de fluide (174) et le premier canal de fluide (170) est ainsi séparé du premier raccord de travail (168) pour amener ou évacuer le milieu de travail hydraulique, l'au moins une variable d'état de fonctionnement détectée du grand manipulateur étant une variable d'état de fonctionnement du groupe de pose de mât articulé et de position angulaire d'un bras de mât.

10. Procédé selon la revendication 9, **caractérisé en ce qu'**au moins une variable d'état de fonctionnement du grand manipulateur du groupe d'état de mouvement du mât articulé, de charge du mât articulé, de charge sur un bras de mât du mât articulé, d'état de fonctionnement des pompe à béton, de pression hydraulique dans le volume de travail côté tige du cylindre hydraulique de l'au moins une unité d'entraînement hydraulique, de pression hydraulique dans le volume de travail côté piston du cylindre hydraulique de l'au moins une unité d'entraînement hydraulique est également détectée afin de séparer, selon ladite variable, le premier canal de fluide du second canal de fluide ou afin de raccorder le premier canal de fluide au second canal de fluide et de séparer ainsi le premier canal de fluide du premier raccord de travail pour amener ou évacuer le milieu de travail hydraulique.
